# EUROPÄISCHE PATENTSCHRIFT

(11) **EP 4 416 786 B1**
(45) Veröffentlichungstag und Bekanntmachung des Hinweises auf die Patenterteilung: **24.06.2026**
(21) Anmeldenummer: 23710001.1
(22) Anmeldetag: 07.03.2023
(51) Int. Cl.: H01M 10/48

(54) **VERFAHREN ZUM ERKENNEN DES THERMISCHEN DURCHGEHENS VON BATTERIEEINZELZELLEN**
METHOD FOR DETECTING THE THERMAL RUNAWAY OF INDIVIDUAL BATTERY CELLS
PROCÉDÉ DE DÉTECTION D'EMBALLEMENT THERMIQUE D'ÉLÉMENTS INDIVIDUELS DE BATTERIE

(30) Priorität: 14.03.2022 DE 102022000889
(43) Veröffentlichungstag der Anmeldung: 21.08.2024
(73) Patentinhaber: Mercedes-Benz Group AG, 70372 Stuttgart (DE)
(72) Erfinder: SCHMIDT, Jan Philipp, 95473 Creußen (DE)
(74) Vertreter: Novagraaf Group
(86) Internationale Anmeldenummer: PCT/EP2023/055809
(87) Internationale Veröffentlichungsnummer: WO 2023/174763

(56) Entgegenhaltungen:
- CN-A- 113 442 725
- US-B2- 9 566 836

## Beschreibung

Die Erfindung betrifft ein Verfahren zum Erkennen des thermischen Durchgehens von Batterieeinzelzellen eines Batteriemoduls nach der im Oberbegriff von Anspruch 1 näher definierten Art.

Grundlegend ist es bekannt, dass Batterieeinzelzellen in Batteriemodulen das Risiko eines thermischen Durchgehens, eines sogenannten Thermal Runaway bzw. einer Thermal Propagation, aufweisen. Dies gilt insbesondere für die in vielen Hochvoltbatterien heute üblichen Lithium-Ionen-Zellen. Aus diesem Grund sind die Batterieeinzelzellen und typischerweise auch ein Batteriemodul aus den Batterieeinzelzellen umgegebenes Modulgehäuse mit Berstelementen versehen, um im Zweifelsfall bei einem durch das thermische Durchgehen verursachten Druckanstieg diesen Druckanstieg abzubauen und kritische Gase aus dem Batteriemodul abzugeben. Dieser Vorgang wird auch als Venting bezeichnet.

Die EP 3 840 083 A1 beschreibt in diesem Zusammenhang ein System, um ein thermisches Durchgehen zu erfassen. Hierfür werden die Berstelemente in den Batterieeinzelzellen direkt überwacht, was sehr aufwändig ist.

Da das thermische Durchgehen lokal und zeitlich sehr schnell ablaufen kann, ist eine Überwachung über Temperatur und Spannung nur mit zum Teil erheblicher Verzögerung möglich. Im Stand der Technik der Technik werden daher andere Möglichkeiten wie zum Beispiel eine Drucküberwachung genutzt. Eine solche Drucküberwachung erfolgt dabei mit Drucksensoren, die ein Venting der Batterieeinzelzellen aufgrund des damit verbundenen Druckanstiegs detektieren können. Dabei werden typischerweise Absolutdruck-Sensoren eingesetzt. Da der Druck in dem Batteriemodul jedoch mit den Umgebungsbedingungen schwanken kann, kann ein Auslösen bei einem festen Schwellenwert zur einer verschlechterten Detektion und/oder einer erhöhten Falsch-Positivrate der Alarmierungen führen.

In diesem Zusammenhang beschreibt die US 9,083,064 B2 ein verbessertes System, welches sich dieser Herausforderung der Drucküberwachung stellt. Die Druckmessung wird dafür in einzelne Teile zerlegt und dann wird individuell der Verlauf eines Druckpeaks mathematisch angenähert und hieraus wird dann ein entsprechendes Signal generiert. Dies ist jedoch außerordentlich aufwändig in der Durchführung und der Berechnung. Beim Einsatz eines Batteriemoduls als Traktionsbatterie oder Teil einer Traktionsbatterie in einem Fahrzeug ist es in der Praxis jedoch häufig so, dass die verfügbaren Rechenkapazitäten deutlich eingeschränkt sind, sodass ein derartig komplexes Verfahren außerordentlich aufwändig und teuer in der Umsetzung oder durch die begrenzten Ressourcen entsprechend fehleranfällig oder erst gar nicht möglich ist.

Aus der CN 1 12 731 169 A ist ebenfalls eine Batterieüberwachung bekannt. Diese kann gemäß einer Ausführungsform den Druck nutzen. Die einzelnen Druckwerte werden dabei gewichtet und es werden paarweise Differenzen gebildet. Diese werden auf das Überschreiten eines Grenzwerts hin überwacht.

Zu weiteren Stand der Technik kann ferner auf die US 2007 / 0 046 261 A1 verweisen werden. Diese beschreibt ein System zur Batterieüberwachung, bei welchem analoge Messwerte in digitale Signale umgewandelt werden. Dabei kann ein Tiefpassfilter zum Einsatz kommen.

Die US 2021 / 0 257 681 A1 versucht abnormale Zustände einer Batterie mittels Veränderungen der gemessenen Spannungswerte zu detektieren. Dabei kann ein FIR-Filter Verwendung finden.

Die Aufgabe der hier vorliegenden Erfindung besteht nun darin, ein verbessertes Verfahren zum Erkennen des thermischen Durchgehens von Batterieeinzelzellen eines Batteriemoduls basierend auf einem Druckwert anzugeben.

Erfindungsgemäß wird diese Aufgabe durch ein Verfahren mit den Merkmalen im Anspruch 1, und hier insbesondere im kennzeichnenden Teil des Anspruchs 1, gelöst.

Das erfindungsgemäße Verfahren ist dabei außerordentlich einfach und verzichtet auf komplexe Berechnungen einschließlich der an sich sinnvollen Berechnung von Druckgradienten, um ein sehr einfaches und robustes System zu schaffen, welches mit minimaler Rechenkapazität auskommt und dabei wenig fehleranfällig ist. Dabei ist es nämlich so, dass neben dem rechnerischen Aufwand zum Erstellen von Druckgradienten auch das in den Druckwerten prinzipbedingt vorliegende Rauschen und Auftreten von Artefakten sehr kritisch sein kann. Durch ein solches Rauschen können beispielsweise trotz im Mittel real ansteigender Werte bei der Gradientenbildung vorübergehend abfallende Werte festgestellt werden, was zu einer weiteren Fehleranfälligkeit von der Gradientenbildung führt.

Die hohe Effizienz und Robustheit gegen Fehler wird bei dem erfindungsgemäßen Verfahren dadurch erreicht, dass der erfasste Druckwert mit wenigstens einem Filter gefiltert wird, um seine Dynamik zu verringern.

Diese besondere Art, die Werte bei dem erfindungsgemäßen Verfahren zu verarbeiten und zu vergleichen, lässt sich dabei außerordentlich einfach programmieren und kann mit minimalem Rechenaufwand auch auf Steuergeräten mit begrenzten Ressourcen einfach, effizient und zuverlässig durchgeführt werden. Die Detektion des thermischen Durchgehens lässt sich so sehr einfach aber gleichzeitig zuverlässig und robust gegen potenzielle Fehler, insbesondere gegen Falsch-Positiv-Warnungen, umsetzen.

Als Filter werden bei dem erfindungsgemäßen Verfahren Tiefpassfilter oder sogenannte Rate-Limiter eingesetzt, welche also den Ausgabewert in seiner Dynamik entsprechend einschränken.

Im Falle von Tiefpassfiltern können diese insbesondere als Filter mit einer unendlichen Impulsantwort, als sogenannte IIR-Filter, umgesetzt werden.

Bei der Ausgestaltungsvariante der Filter als Tiefpassfilter wird der erfasste Druckwert mit wenigstens zwei Tiefpassfiltern unterschiedlicher Grenzfrequenzen in einen ersten Wert, einen zweiten Wert und einen dritten Wert überführt. Die Dynamikverringerung ist dabei beim ersten Wert größer als beim zweiten Wert und beim zweiten Wert größer als beim dritten Wert. Der dritte Wert kann dabei auch ungefiltert sein, also den erfassten Druckwert unmittelbar darstellen. Da derartige erfasste Druckwerte jedoch kritisch hinsichtlich eines Rauschens und hinsichtlich von Artefakten sein können, kann hier ein weiterer Tiefpassfilter zur Eindämmung des Rauschens eingesetzt werden. Die Tiefpassfilter könnten dann entsprechende Grenzfrequenzen von beispielsweise 1 Hz für den ersten Wert, 10 Hz für den zweiten Wert und beispielsweise 100 Hz für den dritten Wert aufweisen.

Beim Rate-Limiter kann es nun ebenfalls vorgesehen sein, dass der erfasste Druckwert mit einem ersten Rate-Limiter in einen ersten Wert und mit einem zweiten Rate-Limiter in einen dritten Wert überführt wird. In diesem Fall wird dann der zweite Wert ungefiltert genutzt, oder wird über einen Tiefpassfilter oder einen weiteren Rate-Limiter ausschließlich zur Rauschunterdrückung in dem erfassten Druckwert gefiltert.

Die so aufbereiteten Werte können dann, egal ob sie über eine Tiefpassfilterung oder über die Filterung mit Rate-Limitern aufbereitet worden sind, genutzt werden, um aus dem ersten Wert und dem zweiten Wert einen ersten positiven Differenzwert zu bilden und aus dem zweiten Wert und dem dritten Wert einen zweiten negativen Differenzwert. Im Falle eines Überschreitens des positiven Grenzwerts oder eines Unterschreitens des negativen Grenzwerts wird dann eine entsprechende Warnmeldung generiert, dass ein thermisches Durchgehen von Batterieeinzelzellen in dem Batteriemodul erkannt worden ist.

Der erste Differenzwert kann dabei mit einem positiven Grenzwert und der zweite Differenzwert mit einem negativen Grenzwert verglichen werden. Der erste Differenzwert zeigt also einen Druckanstieg in dem System an, während der zweite mit dem negativen Grenzwert verglichene Differenzwert einen Druckabfall anzeigt. Der Druckanstieg beispielsweise im Gehäuse eines Batteriemoduls deutet darauf hin, dass die Berstelemente einzelner Batterieeinzelzellen aufgrund eines thermischen Ereignisses geöffnet haben und somit Gase aus den Batterieeinzelzellen in das Innere des Batteriemoduls strömen und für einen Druckanstieg sorgen. Dieser erfolgt mit einer hohen Dynamik, wobei die Dynamik des Druckanstiegs jedoch kleiner ist als die sich typischerweise anschließende Dynamik des Druckabfalls, welcher dann auftritt, wenn das typischerweise weitaus größere, also mit einem größeren durchströmbaren Querschnitt versehene Berstelement des Batteriemoduls selbst öffnet und die sogenannten Venting-Gase in die Umgebung des Batteriemoduls abgegeben werden.

Die Dynamik des ersten Differenzwerts ist also entsprechend geringer als die des zweiten Differenzwerts. Gemäß einer außerordentlich günstigen Weiterbildung des erfindungsgemäßen Verfahrens kann es daher vorgesehen sein, dass die Warnung ausgelöst wird, wenn der zweite Differenzwert den negativen Grenzwert unterschreitet. Dieser Wert wird also als der Wert eingesetzt, welcher zum Erkennen des thermischen Ereignisses tatsächlich genutzt wird. Ungeachtet dessen können entsprechende Vorwarnungen auch beim Überschreiten des positiven Grenzwerts durch den ersten Grenzwert bereits ausgelöst werden.

Um die Gefahr von Falsch-Positiven-Warnmeldungen über erkannte thermische Ereignisse noch weiter zu reduzieren, kann es gemäß einer weiteren sehr vorteilhaften Ausgestaltung des erfindungsgemäßen Verfahrens auch vorgesehen sein, dass in der zeitlichen Reihenfolge aufeinander zuerst der erste Differenzwert den positiven Grenzwert überschritten haben muss, bevor der zweite Differenzwert den negativen Grenzwert unterschreitet, und dass nur bei einem Überschreiten und Unterschreiten der entsprechenden Grenzwerte in eben dieser Reihenfolge die Warnung ausgelöst wird. Eine weitere Möglichkeit, welche alternativ oder ergänzend zur Überwachung des ersten Differenzwerts genutzt werden kann, um die Gefahr falscher Warnungen, insbesondere falsch-positiver Warnungen zu reduzieren, besteht darin, einen vorgegebenen Differenzdruck zum Umgebungsdruck um das Batteriemodul herum mit zu überwachen und die Warnmeldung nur dann auszulösen, wenn sowohl der zweite Differenzwert seinen vorgegebenen negativen Grenzwert unterschreitet und zuvor entweder der erste Differenzwert seinen vorgebebenen positiven Grenzwert überschritten hatte und/oder eine vorgegebene Druckdifferenz gegenüber dem Umgebungsdruck von dem gemessenen Druckwert oder einem lediglich hinsichtlich des Rauschens gefilterten Druckwert, also insbesondere dem dritten Wert im Sinne der oben dargelegten Ausführungsvarianten, überschritten wurde.

Das erfindungsgemäße Verfahren ermöglicht dabei wie oben bereits mehrfach erwähnt eine deutliche Reduzierung hinsichtlich der benötigten Kapazitäten und des

Rechenaufwands. Dennoch kann es gemäß einer sehr vorteilhaften Ausgestaltung des erfindungsgemäßen Verfahrens vorgesehen werden, dass die Filterung und Verarbeitung der entsprechenden Werte überhaupt nur dann startet, sobald der erfasste Druckwert über einem vorgegebenen Aufwachniveau liegt. Dieses Aufwachniveau kann als fester Wert vorgegeben werden, bevorzugt kann auch dieses Aufwachniveau dynamisch angepasst werden. Beispielsweise lässt sich ein Basisdruck in dem Batteriemodul oder der Umgebungsdruck des Batteriemoduls entsprechend nachführen, indem alle fünf Sekunden ein gleitender Durchschnittswert ermittelt wird. Wird dieser gleitende Durchschnittswert um eine vorgegebene Differenz überschritten, dann wäre das Aufwachdruckniveau in dieser Konstellation erreicht, und das erfindungsgemäße Verfahren mit seiner Filterung und Verarbeitung des erfassten Druckwerts nimmt seine Arbeit zur Detektion eines potenziellen thermischen Ereignisses auf.

Weitere vorteilhafte Ausgestaltungen des erfindungsgemäßen Verfahrens und seiner Umsetzung ergeben sich auch aus den Ausführungsbeispielen, welche nachfolgend unter Bezugnahme auf die Figuren näher dargestellt sind.

Dabei zeigen:
- Fig. 1: einen beispielhaften Druckverlauf in einem Batteriemodul im Falle eines thermischen Ereignisses in wenigstens einer seiner Batterieeinzelzellen;
- Fig. 2: einen Ansatz zur Umsetzung des erfindungsgemäßen Verfahrens mit Tiefpassfiltern; und
- Fig. 3: einen Ansatz zur Umsetzung des erfindungsgemäßen Verfahrens mit Rate-Limitern.

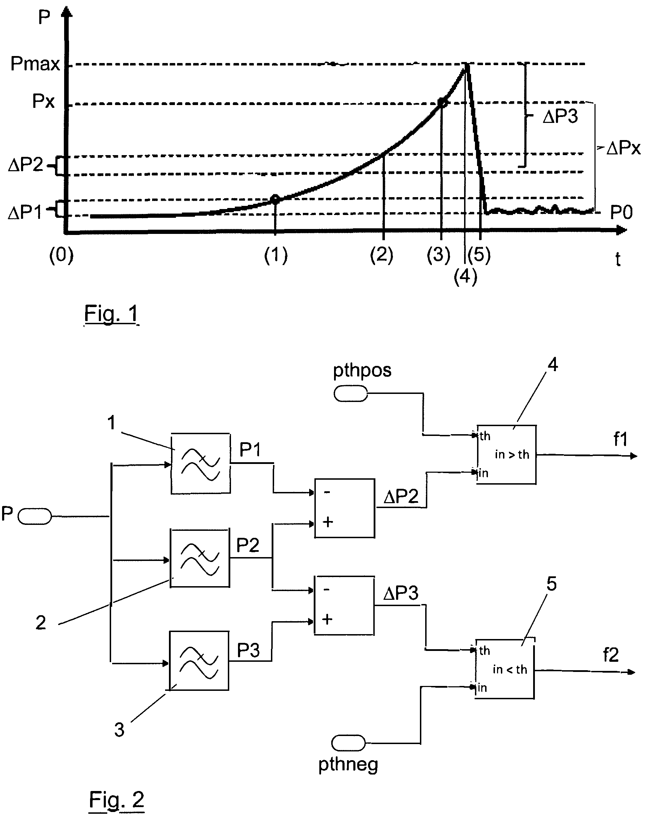

In der Darstellung der Figur 1 ist in einem Diagramm des Drucks P über der Zeit t ein Druckverlauf in einem Batteriemodul im Falle eines thermischen Ereignisses in wenigstens einer seiner Batterieeinzelzellen beispielhaft dargestellt. Das Batteriemodul soll z.B. in einem Fahrzeug verbaut sein, um einen zumindest teilweise elektrischen Antrieb zu unterstützen. Der gesamte dargestellte Zeit-Ausschnitt ist dabei relativ kurz, sodass die gesamte dargestellte Zeitspanne bei in etwa 500 ms liegt. Der eigentliche relevante Abschnitt, den es zuverlässig und robust zu erfassen gilt, liegt bei einer zeitlichen Länge von etwa 200 ms.

Von einem Basisdruckniveau P0, welches zu einem Zeitpunkt 0 vorliegt, steigt der Druck P nun langsam an. Das Basisdruckniveau P0 wird dabei dynamisch nachgeführt, beispielsweise indem der Umgebungsdruck um das Batteriemodul alle fünf Sekunden entsprechend gemessen und ein gleitender Durchschnitt gebildet wird. Sich verändernde Umgebungsdrücke aufgrund einer Bergfahrt, einem Transport mittels Luftfracht oder dergleichen lassen sich so also berücksichtigen, was einen entscheidenden Vorteil gegenüber einer ausschließlichen Berücksichtigung von absoluten Druckwerten darstellt. Zu dem auf der t-Achse mit (1) bezeichneten Zeitpunkt ist eine Druckdifferenz von ΔP1 gegenüber dem Basisdruckniveau P0 aufgetreten. Zum Zeitpunkt (1) wird das System aufgeweckt. Das Aufwachniveau, ab welchem eine Überwachung mit der noch erläuterten Filterung der Druckwerte zum Zeitpunkt (1) startet, liegt also um die Differenz ΔP1 über dem Umgebungsdruck P0, sodass sich dieses Aufwachdruckniveau letztlich durch P0+AP1 ergibt. Die Arbeit des dann aufgeweckten Systems besteht im Wesentlichen in einer Überwachung und Filterung des Drucks P hinsichtlich eines Anstiegs und eines Abfalls sowie gegebenenfalls dem Überschreiten einer festen Druckdifferenz ΔPx gegenüber dem Basisdruck P0.

Eine erste Möglichkeit besteht nun darin, einen Aufbau gemäß Figur 2 mit drei unterschiedlichen Tiefpassfiltern 1, 2, 3 zu verwenden. Diesen wird der Druckwert P zugeführt. Der in der Darstellung der Figur 2 oben dargestellte Tiefpassfilter 1 soll dabei eine relativ niedrige Grenzfrequenz von beispielsweise 1 Hz haben, der mittlere Tiefpassfilter 2 eine Grenzfrequenz von 10 Hz und der untere Tiefpassfilter 3 eine relative hohe Grenzfrequenz von 100 Hz. Der gemessene Druckwert P wird also von jedem der drei Tiefpassfilter 1, 2, 3 in seiner Dynamik unterschiedlich stark verringert, wobei der Tiefpassfilter 1 die stärkste Verringerung und der Tiefpassfilter 3 die kleinste Verringerung bewirkt. Damit liegt nach dem ersten Tiefpassfilter 1 ein erster Wert P1 vor, nach dem zweiten Tiefpassfilter 2 ein zweiter Wert P2 und nach dem dritten Tiefpassfilter 3 ein dritter Wert P3. Diese werden nun zu einem ersten Differenzwert ΔP2 aus dem ersten Wert P1 und dem zweiten Wert P2 bzw. einem zweiten Differenzwert ΔP3 aus dem zweiten Wert P2 und dem dritten Wert P3 verrechnet.

In der Darstellung der Figur 1 sind diese Werte eingezeichnet. Der Wert ΔP2 liegt zum Zeitpunkt (2) vor und bestimmt den Anstieg des Drucks P in dem Batteriemodul 1. Der zweite Differenzwert ΔP3 liegt zum Zeitpunkt (5) vor und bestimmt den Druckabfall in dem Batteriemodul. Der erste Differenzwert ΔP2 lässt sich nun mit einem positiven Grenzwert pthpos entsprechend vergleichen, der zweite Differenzwert ΔP3 mit einem negativen Grenzwert pthneg. Liegt der erste Differenzwert ΔP2 über dem positiven Grenzwert pthpos, ist also ein entsprechender steiler Anstieg des Drucks aufgetreten, dann wird über den in Figur 2 oben dargestellten und mit 4 bezeichneten Baustein ein erstes Flag f1 gesetzt, welches einen positiven Gradienten anzeigt, ohne diesen konkret berechnen zu müssen. Vergleichbares gilt für den unten in der Darstellung der Figur 2 dargestellten Baustein 5, welcher ein zweites Flag f2 immer dann setzt, wenn der zweite Differenzwert ΔP3 unter dem Grenzwert pthneg liegt. Das zweite Flag f2 zeigt also an, dass ein negativer Gradient vorliegt, wiederum ohne diesen explizit zu berechnen.

In der Darstellung der Figur 1 ist der erste Differenzwert ΔP2 und der zweite Differenzwert ΔP3 eingezeichnet. Typisch ist es dabei, dass die Dynamik unterschiedlich stark ist, da der Druckanstieg um den Differenzwert ΔP2 entsprechend langsamer erfolgt, da hier typischerweise nur einzelne Batterieeinzelzellen betroffen sind oder mehrere der Batterieeinzelzellen nacheinander thermisch durchgehen und ihre Berstelemente bersten. Ab dem Zeitpunkt (4) birst dann das Berstelement des Batteriemoduls selbst, welches typischerweise einen relativ großen Durchmesser zum Ablassen der Venting-Gase freigibt. Dementsprechend kommt es zu einem Druckabfall um den zweiten Differenzwert ΔP3 mit sehr starker Dynamik, welcher hinsichtlich der Erfassung zum Zeitpunkt (5) abgeschlossen ist, bevor sich kurz danach wieder ein Druck im Bereich des Basisdruckniveaus P0 einstellt.

Zum Startzeitpunkt (4) des Druckabfalls, also zu dem Zeitpunkt, zu dem das Berstelement des Batteriemoduls geborsten ist, liegt dabei der Maximaldruck Pmax in dem System vor. Daneben kann ein weiterer Druck Px definiert werden, welcher von dem Druck P erstmals zum Zeitpunkt (3) erreicht worden ist. Dieser Druck kann eine Art herkömmlicher Warndruck sein, welcher insbesondere durch seine Druckdifferenz ΔPx gegenüber dem Umgebungsdruck bzw. Basisdruck P0 definiert ist, wobei die Differenz, nicht jedoch der Absolutwert Px, fest vorgegeben sein kann.

Um nun möglichst robust eine zuverlässige Warnmeldung auszulösen, welche die Gefahr einer falschen, insbesondere einer falsch-positiven Warnung reduziert, wird nun in jedem Fall der Druckabfall entsprechend detektiert. Die Warnmeldung wird also ausgegeben, wenn das Flag f2 gesetzt wird.

Um die Robustheit des Systems weiter zu steigern kann zusätzlich ein gesetztes Flag f1 zeitlich vor dem Setzen des Flags f2 berücksichtigt werden und in einer weiteren Ausgestaltung kann ergänzend oder alternativ zu diesem Flag f1 auch das Erreichen des Drucks Px bzw. das Überschreiten der Druckdifferenz ΔPx als Kriterium mitgenutzt werden.

Werden alle Kriterien mitgenutzt, muss also zuerst das Aufwachdruckniveau durch die Differenz ΔP1 gegenüber dem Umgebungsdruck P0 überschritten worden sein, dann muss das Flag f1 gesetzt worden sein und der Differenzdruck ΔPx muss überschritten werden. Sind all diese drei Bedingungen erfüllt und dann wird das Flag f2 gesetzt, kann mit hoher Sicherheit von einem thermischen Durchgehen wenigstens einer der Batterieeinzelzellen in dem Batteriemodul ausgegangen werden, sodass die Warnung sehr zuverlässig und robust ausgelöst werden kann.

Alternativ dazu ließen sich die Ereignisse auch zum Auslösen einer Vorwarnung vor der eigentlichen Hauptwarnung bzw. Alarmierung beim Setzen des Flags f2 durch das in Figur 2 gezeigte System nutzen.

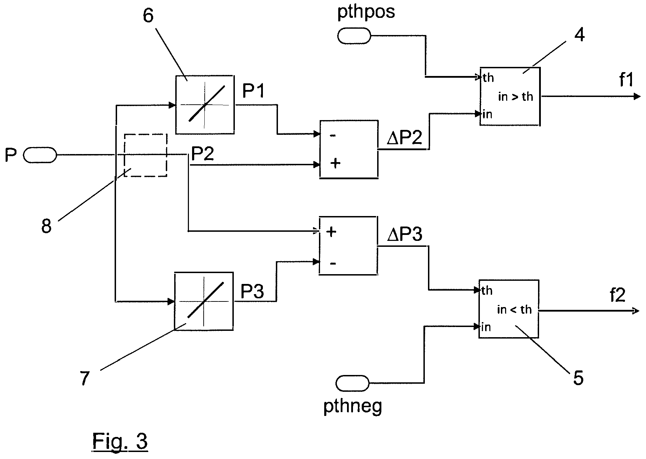

In der Darstellung der Figur 3 ist ein alternativer Aufbau gezeigt, welcher anstelle der Tiefpassfilter 1, 2, 3 sogenannte Rate-Limiter 6, 7 einsetzt. Für den oberen Rate-Limiter 6 wird dabei die Anstiegsrate begrenzt, sodass also der hier generierte erste Wert P1 entsprechend in seiner Dynamik verringert ist. Der zweite Wert P2 gelangt hier ungefiltert oder mit einer optionalen Rauschunterdrückung 8 gefiltert direkt zu den Summierern, der dritte Wert P3 wird über einen zweiten Rate-Limiter 7 entsprechend gefiltert. Die Rauschunterdrückung 8 kann dabei als Tiefpassfilter mit ausreichend hoher Grenzfrequenz, also ausschließlich zur Rauschunterdrückung, ohne eine nennenswerte Reduktion der Dynamik umgesetzt werden oder beispielsweise auch in Form eines Rate-Limiters mit vergleichbarer Funktionalität.

Der Rate-Limiter 6, 7 limitiert dabei die maximale Steigungsrate des von ihm generierten ersten Werts P1 bzw. dritten Werts P3, während die Steigungsrate des zweiten Werts P2 hier quasi unverändert bleibt. Die Rate-Limiter 6, 7 können dabei so eingestellt sein, dass sie beispielsweise innerhalb einer vorgegebenen Zeitspanne von insbesondere ca. 10 ms lediglich Druckänderungen bis zu 2 mPa passieren lassen. Der in der Darstellung der Figur 3 unten dargestellte Rate-Limiter 7 muss dabei so konzipiert sein, dass er in seiner Dynamik dem Anstieg ohne Einschränkung folgen kann und seine Auswirkung erst beim Druckabfall, also nach dem Zeitpunkt (4) in der Darstellung der Figur 1, zu Tragen kommt. Der weitere Ablauf hinsichtlich der zu setzenden Flags f1 und f2 entspricht dann dem bereits zuvor im Rahmen der Figur 2 beschriebenen Ablauf.

## Patentansprüche

1. Verfahren zum Erkennen eines thermischen Durchgehens von Batterieeinzelzellen eines Batteriemoduls, wozu wenigstens ein Druckwert (P) in dem Batteriemodul erfasst wird, wobei der erfasste Druckwert (P) zur Dynamikverringerung mit wenigstens einem Filter (1, 2, 3, 6, 7) gefiltert wird,
**dadurch gekennzeichnet, dass**
der erfasste Druckwert (P) mit wenigstens zwei Tiefpassfiltern (1, 2, 3) unterschiedlicher Grenzfrequenzen in einen ersten Wert (P1), einen zweiten Wert (P2) und einen dritten gefilterten oder ungefilterten Wert (P3) überführt wird, wobei die Dynamikverringerung beim ersten Wert (P1) größer als beim zweiten Wert (P2) und beim zweiten Wert (P2) größer als beim dritten Wert (P3) ist, oder dass der erfasste Druckwert (P) mit einem ersten Rate-Limiter (6) in einen ersten Wert (P1) und mit einem zweiten Rate-Limiter (7) in einen dritten Wert (P3) überführt wird, wobei ein zweiter Wert (P2) ungefiltert oder über eine Rauschunterdrückung (8) gefiltert ist, wonach aus dem ersten Wert (P1) und dem zweiten Wert (P2) wenigstens ein Differenzwert (ΔP2, ΔP3) gebildet wird, wobei der erste Wert (P1) bezüglich der Dynamikverringerung stärker als der zweiten Wert (P2) gefiltert ist, wobei der zweite Wert (P2) bezüglich seiner Dynamikverringerung gefiltert oder ungefiltert ist, wonach der wenigstens eine Differenzwert (ΔP2, ΔP3) mit einem vorgegebenen positiven oder negativen Grenzwert (pthpos, pthneg) verglichen wird, wobei im Fall eines Überschreitens des positiven Grenzwerts (pthpos) oder des Unterschreitens des negativen Grenzwerts (pthneg) eine Warnmeldung generiert wird.

2. Verfahren nach Anspruch 1,
**dadurch gekennzeichnet, dass**
die Tiefpassfilter (1, 2, 3) auf der Basis von Filtern mit unendlicher Impulsantwort umgesetzt werden.

3. Verfahren nach Anspruch 1 oder 2,
**dadurch gekennzeichnet, dass**
aus dem ersten Wert (P1) und dem zweiten Wert (P2) ein erster positiver Differenzwert (ΔP2) gebildet wird, aus dem zweiten Wert (P2) und dem dritten Wert (P3) ein zweiter negativer Differenzwert (ΔP3) gebildet wird, wobei der erste Differenzwert (ΔP2) mit einem positiven Grenzwert (pthpos) und der zweite Differenzwert (ΔP3) mit einem negativen Grenzwert (pthneg) verglichen wird.

4. Verfahren nach Anspruch 3,
**dadurch gekennzeichnet, dass**
die Warnung ausgelöst wird, wenn der zweite Differenzwert (ΔP3) den negativen Grenzwert (pthneg) unterschreitet.

5. Verfahren nach Anspruch 3,
**dadurch gekennzeichnet, dass**
die Warnung ausgelöst wird, wenn der zweite Differenzwert (ΔP3) den negativen Grenzwert (pthneg) unterschreitet, nachdem zuvor der erste Differenzwert (ΔP2) den positiven Grenzwert (pthpos) überschritten hat und/oder eine vorgegebene Druckdifferenz (ΔPx) zum Umgebungsdruck (P0) überschritten wurde.

6. Verfahren nach einem der Ansprüche 1 bis 5,
**dadurch gekennzeichnet, dass**
die Filterung des erfassten Druckwerts (P) startet, sobald der erfasste Druckwert (P) über einem vorgegebenen Aufwachniveau (P0+ΔP1) liegt.

## Claims

1. Method for detecting thermal runaway of individual battery cells of a battery module, for which purpose at least one pressure value (P) in the battery module is acquired, the acquired pressure value (P) being filtered using at least one filter (1, 2, 3, 6, 7) for dynamic range reduction,
**characterized in that**
the acquired pressure value (P) is converted into a first value (P1), a second value (P2), and a third filtered or unfiltered value (P3) using at least two low-pass filters (1, 2, 3) having different cutoff frequencies, the dynamic range reduction being greater in the case of the first value (P1) than in the case of the second value (P2) and being greater in the case of the second value (P2) than in the case of the third value (P3), or **in that** the acquired pressure value (P) is converted into a first value (P1) using a first rate limiter (6) and into a third value (P3) using a second rate limiter (7), a second value (P2) being unfiltered or filtered using noise reduction (8), after which at least one difference value (ΔP2, ΔP3) is formed from the first value (P1) and the second value (P2), the first value (P1) being filtered more strongly with regard to dynamic range reduction than the second value (P2), the second value (P2) being filtered or unfiltered with regard to the dynamic reduction thereof, after which the at least one difference value (ΔP2, ΔP3) is compared with a specified positive or negative limit value (pthpos, pthneg), a warning message being generated in the case of exceeding the positive limit value (pthpos) or falling below the negative limit value (pthneg).

2. Method according to claim 1,
**characterized in that**
the low-pass filters (1, 2, 3) are implemented on the basis of filters having an infinite impulse response.

3. Method according to claim 1 or 2,
**characterized in that**
a first positive difference value (ΔP2) is formed from the first value (P1) and the second value (P2), and a second negative difference value (ΔP3) is formed from the second value (P2) and the third value (P3), the first difference value (ΔP2) being compared with a positive limit value (pthpos) and the second difference value (ΔP3) being compared with a negative limit value (pthneg).

4. Method according to claim 3,
**characterized in that**
the warning is triggered when the second difference value (ΔP3) falls below the negative limit value (pthneg).

5. Method according to claim 3,
**characterized in that**
the warning is triggered when the second difference value (ΔP3) falls below the negative limit value (pthneg) after the first difference value (ΔP2) has previously exceeded the positive limit value (pthpos) and/or a specified pressure difference (ΔPx) with respect to the ambient pressure (P0) has been exceeded.

6. Method according to any of claims 1 to 5,
**characterized in that**
the filtering of the acquired pressure value (P) begins as soon as the acquired pressure value (P) is above a specified wake-up level (P0+ΔP1).

## Revendications

1. Procédé pour la détection d'une fuite thermique d'élément individuels de batterie d'un module de batterie, au moins une valeur de pression (P) étant détectée à cet effet dans le module de batterie, dans lequel la valeur de pression (P) détectée est filtrée avec au moins un filtre (1, 2, 3, 6, 7) pour la réduction de la dynamique, **caractérisé en ce que**
la valeur de pression (P) détectée est convertie avec au moins deux filtres passe-bas (1, 2, 3) de fréquences limites différentes en une première valeur (P1), en une deuxième valeur (P2) et en une troisième valeur (P3) filtrée ou non filtrée, dans lequel la réduction de la dynamique est plus grande pour la première valeur (P1) que pour la deuxième valeur (P2) et est plus grande pour la deuxième valeur (P2) que pour la troisième valeur (P3), **ou en ce que** la valeur de pression (P) détectée est convertie en une première valeur (P1) à l'aide d'un premier limiteur de débit (6) et en une troisième valeur (P3) à l'aide d'un second limiteur de débit (7), dans lequel une deuxième valeur (P2) n'est pas filtrée ou est filtrée par l'intermédiaire d'un moyen de réduction de bruit (8), après quoi au moins une valeur différentielle (ΔP2, ΔP3) est formée à partir de la première valeur (P1) et de la deuxième valeur (P2), dans lequel la première valeur (P1) est plus fortement filtrée que la deuxième valeur (P2) en ce qui concerne la réduction de la dynamique, dans lequel la deuxième valeur (P2) est filtrée ou non filtrée en ce qui concerne sa réduction de la dynamique, après quoi l'au moins une valeur différentielle (ΔP2, ΔP3) est comparée avec une valeur limite positive ou négative (pthpos, pthneg) prédéfinie, dans lequel un message d'avertissement est généré en cas de dépassement par le haut de la valeur limite positive (pthpos) ou de dépassement par le bas de la valeur limite négative (pthneg).

2. Procédé selon la revendication 1,
**caractérisé en ce que**
les filtres passe-bas (1, 2, 3) sont mis en œuvre sur la base de filtres à réponse impulsionnelle infinie.

3. Procédé selon la revendication 1 ou 2,
**caractérisé en ce que**
une première valeur différentielle positive (ΔP2) est formée à partir de la première valeur (P1) et de la deuxième valeur (P2), une seconde valeur différentielle négative (ΔP3) est formée à partir de la deuxième valeur (P2) et de la troisième valeur (P3), dans lequel la première valeur différentielle (ΔP2) est comparée avec une valeur limite positive (pthpos) et la seconde valeur différentielle (ΔP3) est comparée avec une valeur limite négative (pthneg).

4. Procédé selon la revendication 3,
**caractérisé en ce que**
l'avertissement est déclenché lorsque la seconde valeur différentielle (ΔP3) est inférieure à la valeur limite négative (pthneg).

5. Procédé selon la revendication 3,
**caractérisé en ce que**
l'avertissement est déclenché lorsque la seconde valeur différentielle (ΔP3) est inférieure à la valeur limite négative (pthneg), après que la première valeur différentielle (ΔP2) a auparavant dépassé la valeur limite positive (pthpos) et/ou qu'une différence de pression (ΔPx) prédéfinie par rapport à la pression ambiante (P0) a été dépassée.

6. Procédé selon l'une des revendications 1 à 5,
**caractérisé en ce que**
le filtrage de la valeur de pression (P) détectée démarre dès que la valeur de pression (P) détectée est supérieure à un niveau de réveil (P0+ΔP1) prédéfini.
